# EUROPÄISCHE PATENTANMELDUNG

(11) **EP 2 548 842 A1**
(43) Veröffentlichungstag der Anmeldung: **23.01.2013**
(21) Anmeldenummer: 11008011.6
(22) Anmeldetag: 01.10.2011
(51) Int. Cl.: C01B 31/22, B24C 1/00, B08B 7/00, B08B 7/02

(54) **Vorrichtung und Verfahren zur Reinigung von Oberflächen mit gepulsten CO2-Schneepartikeln**

(30) Priorität: 19.07.2011 DE 102011108011
(71) Anmelder: Linde Aktiengesellschaft, 80331 Munich (DE)
(72) Erfinder: Heninger, Rolf, 85635 Höhenkirchen-Siegertsbrunn (DE)
(74) Vertreter: Gellner, Bernd

(57) **Zusammenfassung**

Die Erfindung betrifft ein Verfahren zur Erzeugung eines trockeneishaltigen Kohlendioxidstromes zur Reinigung von Oberflächen, umfassend die Schritte: Einführen von flüssigem Kohlendioxid in zumindest eine erste Kammer (1), so dass in der ersten Kammer (1) ein trockeneishaltiges Kohlendioxidfluid mit einem vordefinierbaren Druck entsteht, und Öffnen der ersten Kammer (1) nach Erreichen des vordefinierbaren Druckes zu einem die erste Kammer (1) umgebenden Außenraum (A) hin. Erfindungsgemäß ist vorgesehen, dass das trockeneishaltige Kohlendioxidfluid beim Öffnen der ersten Kammer (1) lediglich durch die Druckdifferenz zwischen dem besagten vordefinierbaren Druck und dem im Außenraum (A) herrschenden Außendruck in den Außenraum (A) beschleunigt wird. Weiterhin betrifft die Erfindung eine Vorrichtung zur Durchführung des erfindungsgemäßen Verfahrens.

## Beschreibung

Die Erfindung betrifft ein Verfahren zur Erzeugung eines trockeneishaltigen Kohlendioxidfluidstroms zur Reinigung von Oberflächen gemäß dem Oberbegriff des Anspruchs 1 sowie eine Vorrichtung zur Reinigung von Oberflächen.

Verunreinigungen auf Oberflächen können mit trockeneishaltigen Kohlendoxidströmen oder -strahlen schonend und rückstandsfrei entfernt werden. Die Reinigungswirkung der Kohlendioxidstrahlen beruht dabei auf verschiedenen Wirkungsmechanismen. Zunächst werden Verunreinigungen durch die Kältewirkung spröde und weniger elastisch und haftfähig. Weiterhin führt die plötzliche Abkühlung zu Spannungen zwischen der Verunreinigungsschicht und dem zu reinigenden Untergrund. Darüber hinaus wird die kinetische Energie der Trockeneispartikel in eine abschleifende Reinigungsenergie umgewandelt. Die Reinigungswirkungswirkung ist dabei vor allem von Faktoren wie dem Strahldruck abhängig.

Viele Reinigungsverfahren arbeiten nach dem Prinzip, dass flüssiges Kohlendioxid in einem Schneebildungsraum expandiert wird. Dort bilden sich zunächst mikroskopische Teilchen, die teilweise zu größeren Teilchen agglomerieren. Anschließend werden sie in einem Druckluftstrom eingespeist, um sie ausreichend zu beschleunigen. Üblicherweise beträgt das Massen-Verhältnis von Druckluft zu Kohlendioxid 5:1.

Die dafür benötigten Drücke und Volumenströme der Druckluft übersteigen jedoch oft das Potential üblicher Druckluftnetze. Desweiteren wird der Schallpegel durch den Einsatz von Druckluft erhöht. Nachteilig sind außerdem die hohen Kosten zur Bereitstellung von Druckluft, sowie die erschwerte Handhabung durch die mitzuführenden Druckluftschläuche.

Die Reinigungswirkung ohne Druckluftunterstützung ist jedoch gering. Flüssiges Kohlendioxid muss zur Entstehung von Trockeneis zunächst auf Drücke deutlich unter 5,18 bar entspannt werden. Der vorhandene Restdruck reicht nicht aus, um die Teilchen in einer Düse auf hohe Geschwindigkeiten zu beschleunigen. Damit ist der für die Reinigung maßgebliche Impuls der Teilchen gering, daher eignet sich diese Art der Reinigung beispielsweise lediglich für empfindliche elektronische Bauteile.

Eine Alternative zur Beschleunigung der Trockeneispartikel mit einem Druckluftstrom wird in US 6,173,916 beschrieben. Danach wird ein kontinuierlicher Strom aus Trockeneispartikel durch Verwendung spezieller Düsen mit vielen kleinen Ausflussöffnungen erzeugt. Die Ausflussöffnungen sind dabei kleiner als die Eintrittsöffnung für das flüssige Kohlendioxid, so dass in der Düse ein Staudruck erzeugt wird, durch den die Trockeneispartikel ohne externe Druckluftversorgung beschleunigt werden. Mehrere Düsen können ebenfalls zu einem Array zusammengeschaltet werden.

Vor diesem Hintergrund liegt daher der vorliegenden Erfindung die Aufgabe zugrunde, ein einfaches und kostengünstiges Verfahren sowie eine Vorrichtung zur Erzeugung eines trockeneishaltigen Kohlendioxidfluidstroms zur Reinigung von Oberflächen zur Verfügung zu stellen.

Dieses Problem wird durch ein Verfahren mit den Merkmalen des Anspruchs 1 gelöst.

Danach ist vorgesehen, dass ein trockeneishaltiger Kohlendioxidfluidstrahl bzw. -strom durch Öffnen der ersten Kammer lediglich durch die Druckdifferenz zwischen dem Außenraum und dem in der ersten Kammer herrschenden (vordefinierbaren) Druck pulsförmig ausgestoßen wird.

Die Bereitstellung von Druckluft verursacht Kosten, die sich in vergleichbaren Größenordnungen zur Bereitstellung von Kohlendioxid bewegen. Durch einen Wegfall der Druckluftunterstützung sind daher signifikant Kostenersparnisse möglich. Desweiteren wird die Bedingung von CO2-Reinigungssystemen durch den Wegfall von Druckluftanschlüssen und schweren Druckschläuchen erleichtert, sowie der Schallpegel während des Betriebes gesenkt.

Die vorliegende Erfindung basiert auf der Beobachtung, dass bei der kontinuierlichen Einleitung von flüssigem Kohlendioxid in eine zunächst drucklose Kammer zunächst ein Trockeneis/Gasgemisch entsteht, welches dann durch nachfließendes flüssiges Kohlendioxid komprimiert wird und bei einer schlagartigen Dekompression mit erhöhter Geschwindigkeit ausströmt. D.h., eine jene Beschleunigung des Kohlendioxidfluidstromes bewirkende Kompression des Kohlendioxidfluidstromes wird insbesondere durch ein Nachfließen von flüssigem Kohlendioxid in die erste Kammer erzeugt. Dadurch kann ein beschleunigter trockeneishaltiger Kohlendioxidfluidstrom ohne externe Druckluftversorgung erzeugt werden.

Zur Erzeugung des trockeneishaltigen Kohlendioxidfluidstroms wird das flüssiges Kohlendioxid vorzugsweise unter isochoren Bedingungen in die besagte erste Kammer eingeführt, so dass in der ersten Kammer jenes trockeneishaltiges Kohlendioxidfluid mit einem vordefinierbaren Druck (Kammerinnendruck) entsteht.

Eine Kammer (auch Behälter) im Sinne der Erfindung ist ein gegenüber der Umgebung dicht abgeschlossener bzw. verschließbarer Raum. Eine solche Kammer kann über eine oder mehrere Eintritts- und Austrittsöffnungen verfügen. Die Eintritts- oder Austrittsöffnungen können durch geeignete Mittel wie Ventile oder Hähne geöffnet oder verschlossen werden. Bevorzugt ändert sich das Volumen der Kammer während des Einführens des flüssigen Kohlendioxids nicht.

Als Außenraum in Sinne der Erfindung bezeichnet man die die Kammer unmittelbar umgebende Umgebung. Der Außenraum wird unter anderem durch einen Druck (Außendruck genannt) charakterisiert, der niedriger ist als der oben beschriebene vordefinierbare, in der ersten Kammer herrschende Druck. Insbesondere entspricht der besagte Außendruck des Außenraums dem atmosphärischen Druck. Des Weiteren werden im Sinne der Erfindung unter Fluiden Gase und/oder Flüssigkeiten verstanden, wobei die Fluide Gemische aus mehreren Phasen oder Stoffen sein können.

Der besagte vordefinierbare Druck liegt vorzugsweise über dem Grenzdruck, bei dem noch flüssiges Kohlendioxid unter Entspannung zu Trockeneis übergeht. Beim Überschreiten dieses Grenzdrucks entstehen keine weiteren Trockeneispartikel und die bestehenden Trockeneispartikel agglomerieren zu größeren Partikeln.

Beim Einführen des flüssigen Kohlendioxids in die Kammer wird das unter hohen Druck stehende Kohlendioxid entspannt und geht zu einem Gemisch aus Trockeneispartikeln und gasförmigen Kohlendioxid über. Im Sinne der Erfindung bedeutet "entspannen" die Reduzierung des Druckes von komprimierten Flüssigkeiten oder Gasen. Durch weiteres Einführen von flüssigem Kohlendioxid erhöht sich der Druck innerhalb der Kammer über den oben beschriebenen Grenzdruck, ab dem keine neuen Trockeneispartikel mehr entstehen. Beim Öffnen der Kammer entweicht dieser Staudruck explosionsartig und das trockeneishaltige Kohlendioxidfluid wird ausgestoßen.

Gemäß einer bevorzugten Ausführungsform der Erfindung wird die Kammer nach Erreichen eines Innendrucks von 10- 100 bar, bevorzugt bei 50-60 bar geöffnet.

Gemäß einer weiteren bevorzugten Ausführungsform der Erfindung wird die erste Kammer nach dem Öffnen und insbesondere bei einem vordefinierbaren Druck (Kammerinnendruck) von unter 5,18 bar, bevorzugt bei 1 bar, wieder geschlossen und flüssiges Kohlendioxid wird erneut in die erste Kammer eingeführt. Dieser Zyklus von Einführen von flüssigem Kohlendioxid in die erste Kammer, Öffnen der ersten Kammer, Schließen der ersten Kammer und erneutem Einführen von flüssigem Kohlendioxid in die erste Kammer kann beliebig oft wiederholt werden. Weitere Kammern können in der gleichen Weise betrieben werden.

Gemäß einer weiteren bevorzugten Ausführungsform der Erfindung wird die erste Kammer beheizt. Die erste Kammer kann dabei durch das Anlegen einer äußeren Wärmequelle beheizt werden. Eine Temperaturerhöhung in der ersten Kammer beschleunigt die Expansion des eingeführten flüssigen Kohlendioxids und damit die Druckerhöhung innerhalb der Kammer. Dadurch wird die Zeit, in der ein oben beschrieben Zyklus durchlaufen wird, deutlich reduziert.

Gemäß einer weiteren bevorzugten Ausführungsform der Erfindung wird die erste Kammer über einer Zeitspanne im Bereich von 0,5 s bis 2 s, bevorzugt 0,8 s bis 1,0 s, am meisten bevorzugt für 0,9s mit flüssigem Kohlendioxid beladen und anschließend wird die erste Kammer über eine Zeitspanne von 0,05 s bis 0,2 s, bevorzugt für 0,1 s geöffnet. Weitere Kammern können in der gleichen Weise beladen bzw. geöffnet werden.

Gemäß einer weiteren bevorzugten Ausführungsform der Erfindung wird flüssiges Kohlendioxid zusätzlich in eine zweite Kammer (oder mehrere Kammern) eingeführt, so dass in jener zweiten Kammer ein trockeneishaltiges Kohlendioxidfluid mit dem vordefinierbaren Druck entsteht und anschließend die zweite Kammer nach Erreichen des vordefinierbaren Druckes zu einem die zweite Kammer umgebenden Außenraum hin geöffnet, wobei insbesondere das trockeneishaltige Kohlendioxidfluid beim Öffnen der zweiten Kammer lediglich durch die Druckdifferenz zwischen dem vordefinierbaren Druck und dem im Außenraum herrschenden Druck (Außendruck) beschleunigt wird. Dabei werden die erste Kammer und die zweite Kammer vom selben Außenraum umgeben.

Gemäß einer weiteren Ausführungsform der Erfindung wird die zweite Kammer nach der ersten Kammer geöffnet. Insbesondere wird die zweite Kammer zu dem Zeitpunkt geöffnet, bei dem in die erste Kammer flüssiges Kohlendioxid eingeführt wird.

Gemäß einer weiteren Ausführungsform der Erfindung werden die erste und zweite Kammer (oder auch mehrere Kammern) gleichzeitig geöffnet. Das gleichzeitige Öffnen der beiden Kammern bzw. der jeweiligen Ausströmöffnung kann dabei durch ein gemeinsames Mittel zum Öffnen und insbesondere zum Schließen realisiert werden, wie zum Beispiel durch einen insbesondere quer zu den Kammern verfahrbaren Schieber mit mehreren durchgängigen Öffnungen, über welche die Kammern gleichzeitig mit dem Außenraum in Kontakt treten können. Mit einem solchen Mittel können die Kammern auch gleichzeitig geschlossen werden. Die besagten durchgängigen Öffnungen sind daher insbesondere so am Schieber ausgebildet, dass jene durchgängigen Öffnungen mit den Kammern oder mit den Austrittsöffnungen der Kammern in einer ersten Position des Schiebers in Deckung gebracht sind (also mit diesen fluchten) und in einer von der ersten Position verschiedenen zweiten Position des Schiebers so bezüglich der Kammern bzw. deren Ausströmöffnungen verschoben sind, dass jeweils Bereiche des Schiebers die besagten Kammern bzw. Austrittsöffnungen überdecken (verschließen), die benachbart zu den durchgängigen Öffnungen bzw. zwischen den durchgängigen Öffnungen des Schiebers liegen.

Eine Alternative stellt etwa das Öffnen und Schließen der Kammern über einen kegeligen oder runden Ventilkörper dar, der durch eine über eine Spindel aufgebrachte Kraft axial bewegt wird und dabei die betreffende Kammer öffnet, während das Verschließen über eine Federkraft und/oder den sich in der jeweiligen Kammer aufbauenden Druck geschieht. Andere Öffnungsmechanismen sind ebenfalls denkbar, siehe unten.

Des Weiteren wird das der Erfindung zugrundeliegende Problem durch eine Vorrichtung mit den Merkmalen des Anspruchs 9 gelöst.

Die besagte Vorrichtung weist zumindest eine erste und eine von der ersten vollständig getrennte zweite Kammer auf, wobei die beiden Kammern jeweils eine öffenbare, insbesondere auch verschließbare Ausströmöffnung aufweisen, sowie ein Mittel zum Einführen von flüssigen Kohlendioxid in die beiden Kammern, derart, dass in den beiden Kammern ein trockeneishaltiges Kohlendioxidfluid mit einem vordefinierbaren Druck entsteht. Des Weiteren weist die erfindungsgemäße Vorrichtung ein Mittel zum Öffnen, insbesondere auch zum Schließen der beiden Ausströmöffnungen auf, wobei das Mittel zum Öffnen der beiden Ausströmöffnungen dazu ausgebildet sein kann, die beiden Ausströmöffnungen gleichzeitig oder nacheinander zu öffnen.

Die beiden Kammern der erfindungsgemäßen Vorrichtung sind vorzugsweise für den Betrieb von 10-100 bar geeignet bzw. eingerichtet und vorgesehen und können in eine Richtung geöffnet oder geschlossen werden. Die Kammern können z.B. ein Hohlraum in einem Vollkörper sein. Dieser Vollkörper ist vorzugsweise aus geeigneten Materialien gefertigt, um den Verwendungszweck zu erfüllen, wie z.B. Gusseisen, Eisenlegierungen, Edelstahle, Aluminium oder auch Kunstoffe, wie z.B. Duroplaste. Der Vollkörper muss vorzugsweise innerhalb eines Temperaturbereiches von -100 °C bis 50 °C und unter Drücken von 10 bis 100 °C derart formstabil sein, dass sich das Volumen der vom Vollkörper gebildeten ersten bzw. zweiten Kammer im Wesentlich nicht ändert. Eine nicht wesentliche Volumenänderung in Sinne der Erfindung ist insbesondere eine Volumenänderung von unter 10 % des Ausgangsvolumens. Andere derartig drucktragende Mäntel, die die besagten Kammern ausbilden, sind ebenfalls denkbar.

Die Ausströmöffnungen der beiden Kammern ermöglichen den Kontakt zwischen dem Außenraum und jeweils der ersten und der zweiten Kammer. Über die Ausströmöffnungen gelangt das trockeneishaltige Kohlendioxidfluid in den Außenraum.

Das Mittel zum Einführen von flüssigem Kohlendioxid in beide Kammern kann Rohrleitungen, Ventile und eine Quelle für flüssigen Stickstoff umfassen. Diese Quelle kann eine Flüssigkohlendioxidtankversorgung, aber auch flüssiges Kohlendioxid enthaltende Gasflaschen sein. Ebenfalls kann verflüssigtes Kohlendioxid verwendet werden, das bei der Rauchgasreinigung erzeugt wird.

Das Mittel zum Öffnen der beiden Ausströmöffnungen kann z.B. einen Schieber (siehe oben) aufweisen oder ein sonstiges Ventil, einen Hahn, eine Lochscheibe oder einen Zylinder. Weiterhin kann das Mittel eine Antriebsvorrichtung aufweisen, die dazu ausgebildet ist, den Ventil, den Hahn, den Schieber, die Lochscheibe oder den Zylinder zu bewegen. Insbesondere ist die Antriebsvorrichtung dazu ausgebildet, die Lochscheibe oder den Zylinder um eine Drehachse zu drehen, um die die Lochscheibe oder der Zylinder drehbar an der Vorrichtung bzw. an den Kammern gelagert sind. Die Antriebsvorrichtung kann dabei einen Aktuator, insbesondere einen Motor, aufweisen, sowie Mittel zur Übertragung der Bewegungsenergie auf die Lochscheibe oder den Zylinder u.s.w., wie z.B. eine Antriebswelle. Ebenso kann die Antriebsvorrichtung dazu verwendet werden, eine Reihe von Ventilen nacheinander zu betätigen.

Bei einer Lochscheibe ist vorzugsweise vorgesehen, dass diese zumindest eine durchgehende Öffnung aufweist, die entlang der Drehachse der Lochscheibe durch die Lochscheibe verläuft, also die kreisförmige Vorder- und Rückseite der Lochscheibe miteinander verbindet. Durch Drehen der Lochscheibe um die besagte Drehachse kann nun jene durchgehende (durchgängige) Öffnung nacheinander mit einer Austrittsöffnung einer (entlang der Drehachse erstreckten) Kammer zur Deckung gebracht werden, so dass jener Fluidstrom durch die durchgehende Öffnung der Lochscheibe hindurch aus der jeweiligen Kammer (z.B. erste oder zweite Kammer) austreten kann.

Bei einem Zylinder fällt die besagte Drehachse vorzugsweise mit der Zylinderachse zusammen, wobei sich jene durchgehenden Öffnungen quer zu jener Zylinderachse erstrecken, so dass sich jene Öffnungen durch Drehen des Zylinders um die Drehachse in Deckung mit den jeweiligen Ausströmöffnungen bringen lassen. Sofern die durchgehenden Öffnungen unterschiedliche Winkellagen aufweisen, können die Kammern entsprechend nacheinander beim Drehen des Zylinders geöffnet (und wieder verschlossen werden).

Gemäß einer bevorzugten Ausführungsform weist die erfindungsgemäße Vorrichtung eine Wärmequelle auf, die dazu ausgebildet ist, die beiden Kammern zu beheizen. Die

Wärmequelle kann eine Heizvorrichtung sein, die elektrische Energie in Wärmeenergie umwandelt oder die mit der Reaktionswärme aus chemischen oder physikalischen Prozessen betrieben wird. Insbesondere weist die Heizvorrichtung einen Heizdraht auf, der elektrische Energie in Wärmeenergie umwandelt und in der Nähe der Kammern angeordnet ist. "In der Nähe der Kammer" bedeutet im Sinne der Erfindung insbesondere, dass die Entfernung zwischen Heizdraht und beiden Kammern eine Wärmeübertragung mit Wirkungsgrad von über 10 % ermöglicht.

Gemäß einer weiter bevorzugten Ausführungsform der Erfindung ist jeweils eine Düse an den Ausströmöffnungen ausgebildet. Eine Düse ist eine röhrenförmige Vorrichtung, die sich insbesondere abschnittsweise verengt. Die Düse kann dabei in Form und Größe sowie dem Durchmesser der Austrittsöffnung variieren. Eine besonders geeignete Düse ist dabei die Lavaldüse, die eine abschnittsweise Verengung ihres Querschnitts aufweist und durchströmende Fluide beschleunigen kann.

Vorzugsweise wird die besagte Lochscheibe durch eine Druckfeder an die Kammern angepresst. Die Druckfeder wirkt dabei mit ihrer Federkraft derjenigen Kraft entgegen, die vom trockeneishaltigen Kohlendioxidfluid auf die Lochscheibe ausgeübt wird. Durch das Anpressen der Lochscheibe an die Kammern werden die Kammern gegenüber dem Außenraum fest verschlossen, so dass in den geschlossenen Kammern im Wesentlichen kein Druckverlust auftritt und sich ein steigender Druck aufbauen kann.

Gemäß einer weiteren Ausführungsform der Erfindung ist eine Ausströmöffnung der vorhandenen Ausströmöffnungen an der Lochscheibe ausgebildet. Diese Ausströmöffnung kann weiterhin eine Düse aufweisen. Die besagte Ausströmöffnung ist dabei derart an der Lochscheibe ausgebildet, dass jeweils nur eine der vorhandenen Kammern geöffnet werden kann. Das in diesem Falle ausströmende, trockeneishaltige Fluid wird durch jene Düse, die insbesondere als eine Lavaldüse ausgebildet ist, weiter beschleunigt. Die besagte Düse kann durch Schweißen, Kleben, Vernieten oder durch Zapfen, Schrauben u.s.w. an der Lochscheibe befestigt sein oder einstückig an diese angeformt sein.

Weitere Einzelheiten und Vorteile der Erfindung sollen durch die nachfolgenden Figurenbeschreibungen von Ausführungsbeispielen anhand der Figuren erläutert werden.

Es zeigen:
- Fig. 1A-1 B: eine schematische Darstellung des erfindungsgemäßen Verfahrens;
- Fig. 2A: Schnittansichten einer erfindungsgemäßen Vorrichtung mit einer Lochscheibe;
- Fig. 2B: Schnittansichten einer Abwandlung der in der Figur 2A gezeigten Vorrichtung mit einer Lochscheibe;
- Fig. 3A: eine Schnittansicht einer weiteren erfindungsgemäßen Vorrichtung mit einem Schieber; und
- Fig. 3B: eine Schnittansicht einer weiteren erfindungsgemäßen Vorrichtung mit einem Zylinder.

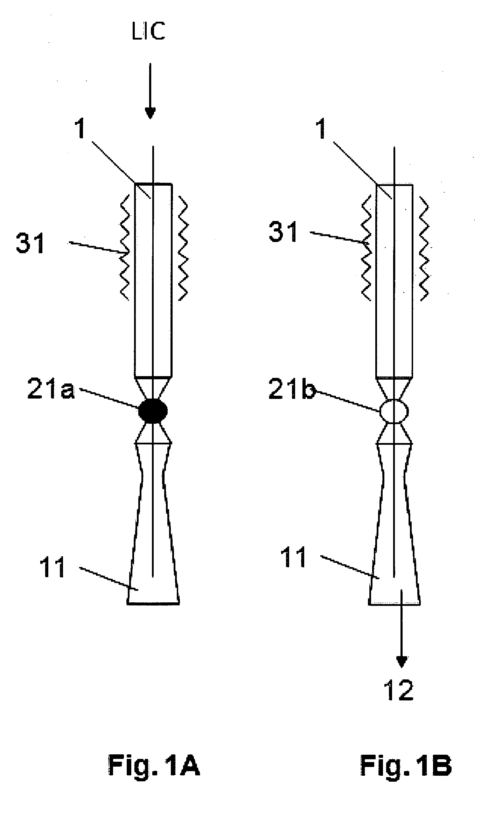

Die Figuren 1A und 1B zeigen das erfindungsgemäße Verfahren zur Erzeugung eines trockeneishaltigen Kohlendioxidfluidstroms zur Reinigung von Oberflächen. Über ein CO2-Bereitstellungsmittel, insbesondere aufweisend ein CO₂-Bündel, ein Bündel aus Gasflaschen oder eine Tankversorgung wird flüssiges CO₂ kontinuierlich bereitgestellt. Es wird über eine an einem ersten Ende einer ersten Kammer 1 vorgesehene Einlassöffnung in jene erste Kammer 1 eingeleitet. Die erste Kammer 1 ist zunächst drucklos, eine an einem dem ersten Ende gegenüberliegenden zweiten Ende der ersten Kammer 1 vorgesehene Ausströmöffnung 11 ist mittels eines Kugelhahns 21 a geschlossen (Fig. 1A). Zunächst entsteht in der ersten Kammer 1 ein Gemisch aus Trockeneis und gasförmigen CO2. Sobald der Druck 5,18 bar übersteigt, wird kein festes Kohlendioxid mehr erzeugt, sondern das entstandene Gaspolster komprimiert. Weiteres flüssiges Kohlendioxid strömt in die erste Kammer 1 und verdampft teilweise, was durch das Anlegen einer äußeren Wärmequelle 31 unterstützt werden kann. Die bereits gebildeten Trockeneispartikel bleiben bestehen und können agglomerieren.

Hat der Kammerdruck (vordefinierbarer Druck) in der ersten Kammer 1 annähernd den Druck der Flüssigkohlendioxidversorgung (LIC-Versorgung), z.B. 50-60 bar, erreicht, wird die erste Kammer 1 schlagartig zur Umgebung hin geöffnet (gezeigt in Fig. 1B). Ein Gemisch 12 aus festem Kohlendioxid und Gas strömt aus der ersten Kammer 1 aus und wird dabei durch die Ausströmöffnung, die als eine Düse 11 ausgebildet ist, auf hohe Geschwindigkeiten beschleunigt. Das Gemisch 12 trifft sodann auf eine zu reinigende (nicht gezeigte) Oberfläche auf. Durch Versprödung, spontane Sublimation und die kinetische Energie der Teilchen werden Verschmutzungen an jener Oberfläche (Staub, Trennmittel, Zieh- und Korrosionsschutzöl) entfernt.

Nach dem vollständigen Entleeren der ersten Kammer 1 wird diese wieder geschlossen und der Prozess beginnt von neuem. Eine typische Zykluszeit beträgt eine Sekunde, wobei das Laden der Kammer z.B. 0,9 s und das Entleeren z.B. 0,1 s dauern kann.

Die eingesetzte Energie (Druck, optional Heizenergie) wird also auf einen sehr kurzen Zeitraum konzentriert und für die Beschleunigung der über einen längeren Zeitraum gesammelten Trockeneisteilchen eingesetzt. Für diesen kurzen Zeitraum (z. B. 0,1 s) steht eine ähnliche Beschleunigungsleistung zur Verfügung, wie im kontinuierlichen Betrieb mit Druckluftunterstützung.

Die durch einen solchen Trockeneis-Puls gereinigte Fläche ist relativ klein (bei einem Kammerdurchmesser von 5 mm je nach Verunreinigung ca. 0,5-2 cm2). Zur Erzielung einer größeren "Flächenleistung" kann die Bündelung mehrerer Düsen (Ausströmöffnungen) 11 bzw. Kammern 1 , die nacheinander oder parallel aktiviert werden, vorgenommen werden. Die Anzahl der Kammern 1 und deren Verteilung können beliebig gewählt werden bzw. an die zu reinigende Fläche angepasst werden.

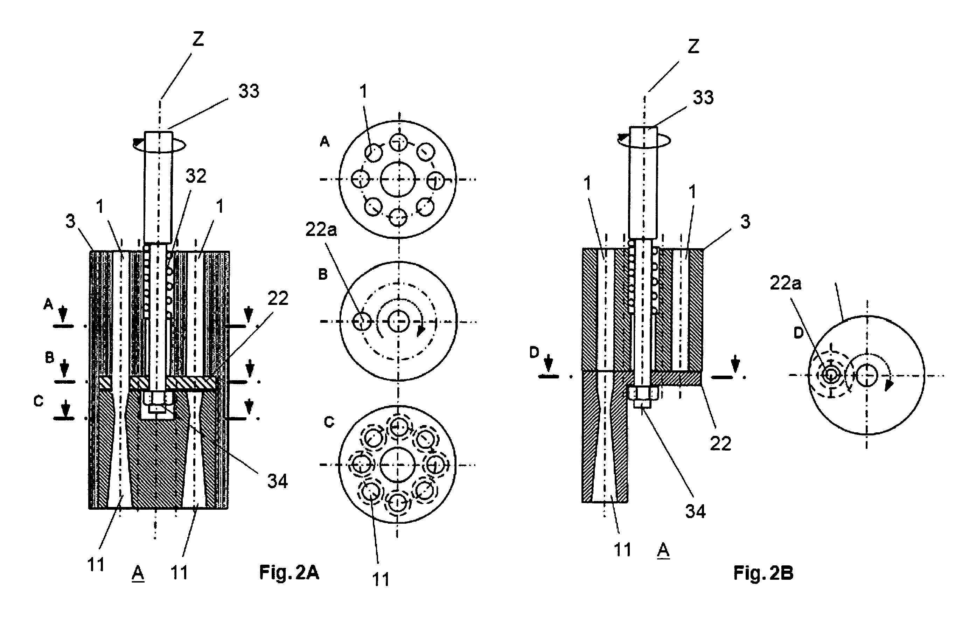

Fig. 2A zeigt eine erfindungsgemäße Vorrichtung, bei der mehrere Kammern 1 insbesondere in einen Vollkörper 3 eingebracht sind. Das Verschließen und Öffnen der Kammern 1 bzw. der jeweils zugeordneten Ausströmöffnung 11 erfolgt durch eine Lochscheibe 22, die sich vorzugsweise mit einer konstanten Frequenz dreht. Bei einer Frequenz von 1 Hz wird jede Kammer 1 einmal pro Minute geöffnet. Die Lochscheibe 22 weist eine durchgehende Öffnung (Loch) 22a auf, die sich entlang einer Drehachse Z der Lochscheibe 22 erstreckt, um die die Lochscheibe 22 drehbar bezüglich der Kammern 1 gelagert ist. Die Form des Lochs 22a in der Lochscheibe 22 kann variabel sein. Ebenso kann die Lochscheibe 22 mehrere Öffnungen mit unterschiedlichem Abstand zum Mittelpunkt der Lochscheibe 22 aufweisen. Wird die Lochscheibe 22 gemäß Figur 2A um die Drehachse Z gedreht, wird das Loch 22 nacheinander mit den einzelnen Ausströmöffnungen 11 in Deckung gebracht, so dass die zugeordnete Kammer 1 geöffnet wird. Wird das Loch 22a durch Drehen um die Drehachse Z mit einer Ausströmöffnung 11 außer Deckung gebracht, wird die zugeordnete Kammer 1 entsprechend (wieder) verschlossen.

Zur Beschleunigung der Partikel gibt es zu jeder Kammer 1 eine eigene Düse 11, die in den Vollkörper 3 eingebracht werden kann. Das ermöglicht eine Variation des Sprühbilds jeder Düse (z. B. rund oder rechteckig), um beim Überstreichen einer Oberfläche ein möglichst homogenes Reinigungsergebnis zu erzielen. Der Düsenkörper einer Düse 11 kann dabei fest, insbesondere einstückig, mit jenem Vollkörper 3 verbunden sein und dabei insbesondere gleichzeitig als untere Abstützung der Lochscheibe 22 dienen. Er stellt auch sicher, dass Kohlendioxid ausschließlich durch die Düsen (Ausströmöffnungen) 11 austritt.

Der Druckaufbau in den Kammern 1 erfordert eine gute Abdichtung durch die Lochscheibe 22. Sie wird daher vorzugsweise wie ihre Gegenfläche an den Kammern 1, über die die Lochscheibe 22 an den Kammern 1 anliegt, vorzugsweise plan gefertigt und verfügt bevorzugt über geringe Reibwerte. Bevorzugt wird weiterhin die axiale Kraft, die durch den Gasdruck in den Kammern 1 auf die Lochscheibe 22 aufgebracht wird, ausgeglichen. Die Kraft wurde sonst einen z.B. durch Toleranzen bedingten Spalt aufdrücken und die Kammern 1 könnten miteinander kommunizieren. Das Aufbringen einer Gegenfeder ist durch einen Anpressmechanismus, bestehen aus einer Druckfeder 32, möglich. Es ist sinnvoll, die Lochscheibe 22 gelenkig aufzuhängen. Damit können Toleranzen in der Neigung der Lochscheibe 22 zur Drehachse Z , die ein planes Aufliegen verhindern, kompensiert werden (anstelle einer Mutter 32 z.B. ein Kugelgelenk).

Bei der in der Fig. 2B gezeigten Variante ist eine der Düsen (Ausströmöffnungen) 11 an der Lochscheibe 22 selbst ausgebildet. Diese Düse 11 dreht sich also mit der Lochscheibe 22 mit. Dies hat Vorteile bezüglich Kosten und Gewicht.

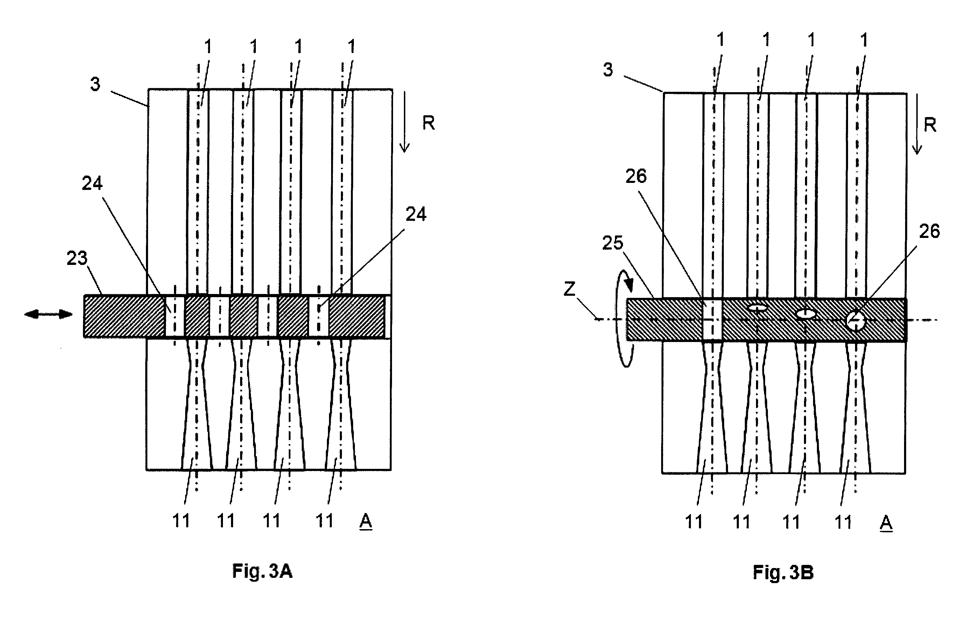

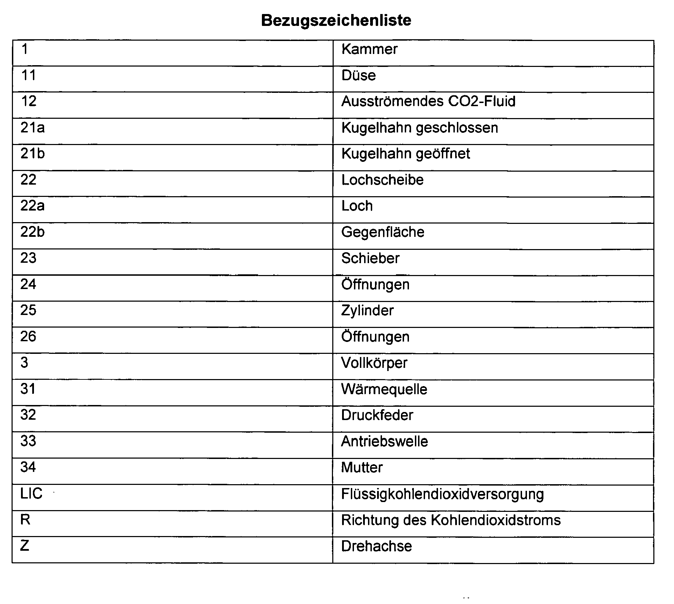

Fig. 3A zeigt eine weitere Ausführungsform der erfindungsgemäßen Vorrichtung, bei der insbesondere ein Vollkörper 3 vorgesehen ist, der zumindest zwei Hohlräume bzw. Kammern 1 umfasst. Die Kammern 1 können ggf. in allen Ausführungsformen auch in einer sonstigen Weise ausgebildet sein.

Die Kammern 1 sind wie zuvor zur Aufnahme von Kohlendioxid ausgebildet. Das in Richtung R des zu erzeugenden Kohlendioxidstroms gelegene zweite Ende der Kammern 1 ist im Unterschied zu den Figuren 2A und 2B nunmehr durch einen insbesondere quaderförmigen Schieber 23 öffenbar und verschließbar. Hinter dem Schieber 23 sind (stromab) die Düsen (Ausströmöffnungen) 11 der Kammern 1 angeordnet. Der Schieber 23 kann senkrecht zur Richtung R (also quer zu den Kammern 1) verschoben werden und verfügt vorzugsweise über eine der Zahl der Kammern 1 entsprechende Anzahl an durchgehenden Öffnungen (z.B. Bohrungen) 24, die den Schieber 23 vollständig durchstoßen. Die Bohrungen 24 und die Düsen 11 sind dabei so angeordnet, dass in einer bestimmten Schieberposition (erste Position) jeweils eine Öffnung 24 und eine zugeordnete Düse 11 zur Deckung gebracht sind bzw. übereinander liegen und somit eine geöffnete Ausströmöffnung 11 für die betreffende Kammer 1 bilden. Sofern die Öffnungen 24 zueinander parallel verlaufen und quer zur Richtung R einen Abstand zueinander aufweisen, der dem entsprechenden Abstand der Kammern 1 entspricht, können die Kammern 1 durch die in den Schieber 23 eingebrachten Öffnungen 24 gleichzeitig geöffnet werden. Die Kammern 1 können durch Verfahren des Schiebers 23 quer zur Richtung R wieder (gleichzeitig) verschlossen werden (zweite Position).

Fig. 3B zeigt eine Abwandlung der in der Fig. 3A gezeigten Ausführungsform, bei der im Unterschied zur Figur 3A kein Schieber, sondern ein um eine Drehachse Z drehbarer Zylinder 25 zum Öffnen bzw. Verschließen der Ausströmöffnungen 11 vorgesehen ist. Dabei fällt die Drehachse Z mit der Zylinderachse zusammen, die quer zur Richtung R orientiert ist. Der Zylinder 25 weist eine der Anzahl an Kammern 1 entsprechende Zahl von durchgehenden Öffnungen (Bohrungen) 26 auf, die je einer Ausströmöffnung 11 zugeordnet sind. Die Öffnungen 26 sind senkrecht zur Drehachse Z des Zylinders 25 angeordnet und werden insbesondere unter verschiedenen Winkeln so in den Zylinder 25 eingebracht, dass keine der Öffnungen 26 parallel zu einer anderen Öffnung 26 verläuft, so dass jene Öffnungen 26 beim Drehen des Zylinders 25 um die Drehachse Z nacheinander mit den hinter dem Zylinder 25 stromab in der Richtung R angeordneten Düsen (Ausströmöffnungen) 11 in Deckung bringbar sind, um die Ausströmöffnungen 11 nacheinander zu öffnen (und zu verschließen).

## Patentansprüche

1. Verfahren zur Erzeugung eines trockeneishaltigen Kohlendioxidfluids zur Reinigung von Oberflächen, umfassend die Schritte:
- Einführen von flüssigem Kohlendioxid in zumindest eine erste Kammer (1), so dass in der ersten Kammer (1) ein trockeneishaltiges Kohlendioxidfluid mit einem vordefinierbaren Druck entsteht, und
- Öffnen der ersten Kammer (1) nach Erreichen des vordefinierbaren Druckes zu einem die erste Kammer (1) umgebenden Außenraum (A) hin,
**dadurch gekennzeichnet, dass**
das trockeneishaltige Kohlendioxidfluid beim Öffnen der ersten Kammer (1) lediglich durch die Druckdifferenz zwischen dem besagten vordefinierbaren Druck und dem im Außenraum (A) herrschenden Außendruck in den Außenraum (A) beschleunigt wird.

2. Verfahren nach Anspruch 1, **dadurch gekennzeichnet, dass** die erste Kammer (1) nach Erreichen eines vordefinierbaren Druckes von 10-100bar, bevorzugt von 50-60 bar geöffnet wird.

3. Verfahren nach Anspruch 1 oder 2, **dadurch gekennzeichnet, dass** die erste Kammer (1) nach dem Öffnen wieder verschlossen wird und anschließend in die erste Kammer (1) erneut flüssiges Kohlendioxid eingeführt wird, wobei die erste Kammer (1) insbesondere dann wieder verschlossen wird, wenn der besagte vordefinierbare Druck unterhalb von 5,18 bar liegt.

4. Verfahren nach einem der Ansprüche 1 bis 3, **dadurch gekennzeichnet, dass** die erste Kammer (1) beheizt wird.

5. Verfahren nach einem der Ansprüche 1 bis 4, **dadurch gekennzeichnet, dass** die erste Kammer (1) über einen Zeitraum von 0,9s mit flüssigem Kohlendioxid beladen wird und anschließend die erste Kammer (1) über einen Zeitraum von 0,1 s geöffnet wird.

6. Verfahren nach einem der Ansprüche 1 bis 5,**gekennzeichnet durch** die weiteren Schritte:
- Einführen von flüssigen Kohlendioxid in zumindest eine zweite Kammer (1), so dass in der zweiten Kammer (1) ein trockeneishaltiges Kohlendioxidfluid mit einem vordefinierbaren Druck entsteht, und insbesondere
- Öffnen der zweiten Kammer (1) nach Erreichen des vordefinierbaren Druckes zu einem die zweite Kammer (1) umgebenden Außenraum hin,
- wobei insbesondere das trockeneishaltige Kohlendioxidfluid beim Öffnen der zweiten Kammer (1) lediglich **durch** die Druckdifferenz zwischen dem besagten vordefinierbaren Druck und dem in Außenraum herrschenden Außendruck in den Außenraum beschleunigt wird.

7. Verfahren nach Anspruch 6, **dadurch gekennzeichnet, dass** die zweite Kammer (1) nach der ersten Kammer (1) geöffnet wird, wobei insbesondere die zweite Kammer (1) dann geöffnet wird, wenn in die erste Kammer (1) flüssiges Kohlendioxid eingeführt wird.

8. Verfahren nach Anspruch 6, **dadurch gekennzeichnet, dass** die erste und die zweite Kammer (1) gleichzeitig geöffnet werden

9. Vorrichtung zur Erzeugung eines trockeneishaltigen Kohlendioxidfluids, insbesondere zur Reinigung von Oberflächen, mit:
- zumindest einer ersten und einer zweiten Kammer (1) zur Aufnahme von Kohlendioxid, die jeweils eine öffenbare Ausströmöffnung (11) aufweisen, und
- einem Mittel zum Einführen von Kohlendioxid in die beiden Kammern (1), derart, dass in den Kammern (1) ein Kohlendioxidfluid mit einem vordefinierbaren Druck entsteht, und
- einem Mittel zum Öffnen der beiden Ausströmöffnungen (11),
- wobei das Mittel zum Öffnen der beiden Ausstromöffnungen (11) dazu eingerichtet und vorgesehen ist, die beiden Ausströmöffnungen (11) gleichzeitig oder nacheinander zu öffnen.

10. Vorrichtung nach Anspruch 9, **dadurch gekennzeichnet, dass** eine Wärmequelle (31) vorgesehen ist, die dazu eingerichtet und vorgesehen ist, die beiden Kammern (1) zu beheizen.

11. Vorrichtung nach einem der Ansprüche 9 bis 10, **dadurch gekennzeichnet, dass** die beiden Ausströmöffnungen (11) jeweils als eine Düse ausgebildet sind.

12. Vorrichtung nach einem der Ansprüche 9 bis 11, **dadurch gekennzeichnet, dass** das Mittel zum Öffnen einen Kugelhahn (21), eine Lochscheibe (22), einen Schieber (23), einen Zylinder (25) oder einen rotationssymmetrischen Dichtkörper, insbesondere in Form eines Kegels, einer Kugel oder eines Zylinders, aufweist.

13. Vorrichtung nach Anspruch 12, **dadurch gekennzeichnet, dass** die Lochscheibe (22) oder der Dichtkörper durch eine Druckfeder (32) an die Kammern (1) oder an eine Dichtfläche am Kammeraustritt gepresst wird.

14. Vorrichtung nach einem der Ansprüche 12 bis 13, **dadurch gekennzeichnet, dass** eine Ausströmöffnung (11) der beiden Ausströmöffnungen (11) an der Lochscheibe (22) ausgebildet ist.
